# EUROPEAN PATENT SPECIFICATION

(11) **EP 2 733 162 B1**
(45) Date of publication and mention of the grant of the patent: **20.12.2017**
(21) Application number: 12814332.8
(22) Date of filing: 21.06.2012
(51) Int. Cl.: C08J 7/04, B32B 27/36

(54) **COATING FILM**
BESCHICHTUNGSFILM
FILM DE REVÊTEMENT

(30) Priority: 17.07.2011 JP 2011157295
(43) Date of publication of application: 21.05.2014
(73) Proprietor: Mitsubishi Chemical Corporation, Tokyo (JP)
(72) Inventor: KAWASAKI, Taishi, Maibara-shi Shiga 521-0234 (JP); AMAKO, Katsuya, Maibara-shi Shiga 521-0234 (JP); KATO, Yuka, Maibara-shi Shiga 521-0234 (JP); FUNATSU, Ryosuke, Maibara-shi Shiga 521-0234 (JP); FUJITA, Masato, Maibara-shi Shiga 521-0234 (JP)
(74) Representative: Ter Meer Steinmeister & Partner
(86) International application number: PCT/JP2012/065804
(87) International publication number: WO 2013/011795

(56) References cited:
- EP-A1- 2 567 814
- EP-A1- 2 769 840
- EP-A1- 2 769 841
- WO-A1-2010/023891
- WO-A1-2010/143551
- WO-A1-2011/135994
- JP-A- 2010 131 937
- JP-A- 2010 131 937
- US-A- 5 858 527

## Description

### TECHNICAL FIELD

The present invention relates to a coated film, and more particularly, to a coated film that can be suitably used in the applications requiring a good transparency, a good slip property and prevention of occurrence of interference fringes owing to reflection of external light, for example, as film members for transparent electrodes for touch panels, etc.

### BACKGROUND ART

In recent years, polyester films have been used in various parts for displays, and also used as a base material for films for transparent electrodes of touch panels or the like. In these applications, since an appearance of the product is important, it has been required that a base film used therein is excellent in transparency and visibility. In addition, the base film is required to have a good handling property and a good mar resistance in view of post-processing thereof.

These films have been often subjected to hard coating treatment as post-processing in order to enhance an anti-curling property, a mar resistance and a surface hardness thereof, etc. In order to enhance adhesion between a polyester film as the base film and a hard coat layer, a coating layer having an easy-bonding property is generally provided as an intermediate layer therebetween. For this reason, refractive indices of these three layers including the polyester film, the easy-bonding coating layer and the hard coat layer must be taken into consideration to avoid occurrence of interference fringes.

When using the films having interference fringes in displays such as touch panels, the displays tend to exhibit a poor visibility, resulting in difficulty in handling thereof upon use. For this reason, it has been required to take a suitable measure against the interference fringes. In general, it is considered that in order to suppress occurrence of interference fringes, the refractive index of the coating layer is present near a geometrical mean value of a refractive index of the polyester film as the base material and a refractive index of the hard coat layer. Therefore, it is ideally required to adjust the refractive index of the coating layer near to the geometrical mean value. In this case, since the polyester film has a high refractive index, it has been generally required that the coating layer is designed to have a high refractive index.

As the method of enhancing a refractive index of the coating layer to improve interference fringes, there is known, for example, the method in which a metal chelate compound having a high refractive index is used in combination with a resin in the coating layer. However, in this case, owing to unstableness of the metal chelate compound in an aqueous solution, a coating solution used therein also tends to become unstable according to combination between the compound and resin, so that the procedure of replacing the coating solution with new one must be frequently repeated when continuing the film production process for a long period of time (Patent Document 1). In addition, high-refractive index materials generally used tend to be deteriorated in adhesion property to a surface functional layer such as a hard coat layer. Therefore, it has been required to provide a coating layer that can be effectively enhanced in adhesion property even when used in combination with the high-refractive index materials.

Patent Document 2 is directed to a laminated polyester film comprising a polyester film and a coating layer which is produced by applying a coating solution comprising a metal oxide, an oxazoline compound and an epoxy compound thereonto. Patent Document 3 is directed to a biaxially oriented polyester film consisting of a polyester resin, polytetrafluoroethylene resin particles and a polyacrylate dispersant.

Patent Document 4 relates to a laminated polyester film used in a backlight unit of a liquid crystal device, wherein an absolute reflectance of an applied layer on one surface of the polyester film has the minimum value within a range of 450-750 nm, the absolute reflectance in the minimum value is 4.0% or more.

### CITATION LIST

### PATENT LITERATURE

Patent Document 1: Japanese Patent Application Laid-Open (KOKAI) No. 2005-97571
Patent Document 2: EP 2 567 814 A1
Patent Document 3: US 5,858,527 A
Patent Document 4: JP 2010 131937 A

### SUMMARY OF THE INVENTION

### Problems to be Solved by the Invention

The present invention has been accomplished in view of the above conventional problems. An object of the present invention is to provide a coated film which has a good transparency and a good slip property, is prevented from suffering from occurrence of interference fringes owing to reflection of external light, and can exhibit an excellent adhesion property to various surface functional layers such as a hard coat layer.

### Means for Solving Problems

As a result of the present inventors' earnest study in view of the above problems, it has been found that these problems can be readily solved by using a coated film having a specific structure. The present invention has been attained on the basis of this finding.

That is, in an aspect of the present invention, there is provided a coated film comprising a polyester film comprising particles having an average particle diameter of not more than 3.0 µm, and a coating layer formed on at least one surface of the polyester film which is prepared from a coating solution comprising a metal oxide and two or more crosslinking agents, in which the coating layer has an absolute reflectance having one minimum value in a wavelength range of 400 to 800 nm, and the absolute reflectance at the minimum value is not less than 4.0%, wherein the particles are crosslinkable organic particles comprising aluminum oxide or zirconium oxide as a dispersant,
wherein a content of the metal oxide in the coating solution for forming the coating layer is 3 to 70% by weight,
wherein coating layer has a thickness in the range of 0.04 to 0.20 µm,
wherein a content of the particles in the polyester film is 1 to 5000 ppm,
wherein the average particle diameter is defined as average value of particles diameters of 10 particles, wherein the particle diameter is determined by measuring major axis diameters and minor axis diameters of particles in the polyester film using a laser microscope to obtain an average value thereof as a particle diameter thereof, wherein absolute reflectance is measured by attaching a black tape to a back surface of a polyester film which is opposite to its surface to be measured, and the surface of a coating layer formed on the polyester film is subjected to measurement for an absolute reflectance thereof in a wavelength range of 300 to 800 nm using a ultraviolet/visible spectrophotometer and an automatic absolute reflectance analyzer under the conditions of a synchronous mode; incident angle: 5°; N-polarization; response: Fast; data sampling interval: 1.0 nm; band width: 10 nm; and scanning speed: 1000 m/min, to thereby evaluate a wavelength at a minimum value of a reflectance (bottom wavelength) as well as the reflectance.

### Effect of the Invention

In accordance with the present invention, there can be provided a base material film which is excellent in transparency and slip property, can be prevented from suffering from occurrence of interference fringes owing to reflection of external light when various surface functional layers such as a hard coat layer are laminated thereon, and is excellent in adhesion property to the various surface functional layers. Therefore, the present invention has a high industrial value.

### PREFERRED EMBODIMENTS FOR CARRYING OUT THE INVENTION

The polyester film constituting the coated film of the present invention may have either a single layer structure or a multilayer structure. Unless departing from the scope of the present invention, the polyester film may have not only a two or three layer structure but also a four or more multilayer structure, and the layer structure of the polyester film is not particularly limited. From the standpoint of ensuring a good transparency without deterioration in slip property, the polyester film preferably has a three- or more layer structure. In view of facilitated production, the polyester film more preferably has a three-layer structure in which any outermost surface layer suitably comprises particles. Thus, if the polyester film has such a multilayer structure that no particles are included in an intermediate layer, it is possible to enhance a slip property of the polyester film while maintaining a good transparency thereof.

The polyester for the polyester film may be either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyesters include polyethylene terephthalate or the like. On the other hand, as a dicarboxylic acid component of the copolyester, there may be mentioned one or more compounds selected from the group consisting of isophthalic acid, phthalic acid, terephthalic acid, 2,6-naphthalenedicarboxylic acid, adipic acid, sebacic acid and oxycarboxylic acids (such as, for example, p-oxybenzoic acid). As a glycol component of the copolyester, there may be mentioned one or more compounds selected from the group consisting of ethylene glycol, diethylene glycol, propylene glycol, butanediol, 4-cyclohexanedimethanol and neopentyl glycol.

The polymerization catalyst for production of the polyester is not particularly limited, and any conventionally known compounds may be used as the polymerization catalyst. Examples of the polymerization catalyst include an antimony compound, a titanium compound, a germanium compound, a manganese compound, an aluminum compound, a magnesium compound and a calcium compound. Among these compounds, in particular, from the standpoint of a high brightness of the resulting film, preferred is the titanium compound.

In the present invention, it is essentially required that the polyester film comprises the particles having an average particle diameter of not more than 3.0 µm.

The particles incorporated in the polyester film are used for the purpose of enhancing a slip property of the film, attaining a good handling property, and imparting a good mar resistance to the film.

The average particle diameter of the particles is not more than 3.0 µm, preferably 0.03 to 2.5 µm, and more preferably 0.5 to 2.0 µm. When the average particle diameter of the particles becomes larger, it is effective to impart a good slip property to the film, but the film tends to be deteriorated in transparency. For this reason, when the average particle diameter of the particles is out of the above-specified range, the resulting film tends to be unusable in the applications requiring a good transparency as an important factor.

The content of the particles in the polyester film may vary depending upon the average particle diameter of the particles, and the content of the particles in a layer of the polyester film which layer comprises the particles is in the range of 1 to 5000 ppm, preferably 50 to 1000 ppm and more preferably 100 to 700 ppm. When the content of the particles is less than 1 ppm, it may be impossible to impart a sufficient slip property to the film. When the content of the particles is more than 5000 ppm, the resulting film tends to be deteriorated in transparency.

The thickness of the layer of the polyester film which layer comprises the particles may vary depending upon the average particle diameter and content of the particles, and is in the range of usually 0.5 to 125 µm, preferably 1 to 10 µm and more preferably 1 to 5 µm. When the thickness of the polyester film layer comprising the particles is less than 0.5 µm, there tends to occur such a fear that the particles are desorbed from the film. When the thickness of the polyester film layer comprising the particles is more than 125 µm, the resulting film tends to be insufficient in transparency.

The particles are crosslinking organic particles, for example, particles of a copolymer of styrene or a (meth)acrylate with divinyl benzene such as a styrene-divinyl benzene copolymer comprising aluminum oxide or zirconium oxide as a dispersant. Thus, the aluminum oxide or zirconium oxide mixed in the crosslinking organic particles is bonded onto a surface of the respective crosslinking organic particles and acts as a dispersant.

The shape of the particles used in the polyester layer is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The method of adding the particles to the polyester layer is not particularly limited, and any conventionally known methods can be suitably used therefor. For example, the particles may be added at any optional stages in the process for producing the polyester forming the respective layers. The particles are preferably added to the polyester after completion of the esterification reaction or transesterification reaction.

In addition, there may also be used the method of blending a slurry of the particles prepared by dispersing the particles in ethylene glycol or water with the raw polyester material using a vented kneading extruder, the method of blending the dried particles with the raw polyester material using a kneading extruder, or the like.

The polyester film may also comprise an ultraviolet absorber in order to improve a weathering resistance of the film and prevent deterioration in liquid crystals of liquid crystal displays used in touch panels and the like. The ultraviolet absorber is not particularly limited as long as it is a compound that is capable of absorbing an ultraviolet ray and can withstand heat applied during a process for producing the polyester film.

As the ultraviolet absorber, there are generally known an organic ultraviolet absorber and an inorganic ultraviolet absorber. In view of a good transparency of the resulting film, among these ultraviolet absorbers, the organic ultraviolet absorber is preferred. Examples of the organic ultraviolet absorber include, but are not particularly limited to, cyclic iminoester-based ultraviolet absorbers, benzotriazole-based ultraviolet absorbers and benzophenone-based ultraviolet absorbers. Among these organic ultraviolet absorbers, cyclic iminoester-based ultraviolet absorbers and benzotriazole-based ultraviolet absorbers are preferred in view of a good durability. These ultraviolet absorbers may be used in combination of any two or more thereof.

Meanwhile, the above polyester film may also comprise, in addition to the above particles and ultraviolet absorbers, known additives such as an antioxidant, an antistatic agent, a thermal stabilizer, a lubricant, a dye, a pigment, etc., if required.

The thickness of the polyester film (in the form of a single layer film or a multilayer film) is not particularly limited, and the polyester film may have any thickness as long as it can be produced while maintaining a suitable film shape. The thickness of the polyester film is usually in the range of 10 to 300 µm and preferably 25 to 250 µm.

Next, an example of the process of producing the polyester film used in the present invention is more specifically explained, although the present invention is not particularly limited thereto. That is, in the production process, there is preferably used such a method in which the above-mentioned raw polyester material is extruded from a die in the form of a molten sheet, and the molten sheet is cooled and solidified on a chilled roll to obtain an undrawn sheet. In this case, in order to enhance a flatness of the obtained sheet, it is preferred to enhance adhesion between the sheet and the rotary chilled drum. For this purpose, an electrostatic pinning method or a liquid coating adhesion method is preferably used. Next, the thus obtained undrawn sheet is biaxially drawn. In such a case, the undrawn sheet is first drawn in one direction thereof using a roll-type or tenter-type drawing machine. The drawing temperature is usually 70 to 120°C and preferably 80 to 110°C, and the draw ratio is usually 2.5 to 7 times and preferably 3.0 to 6 times. Next, the thus drawn film is further drawn in the direction perpendicular to the drawing direction of the first stage. In this case, the drawing temperature is usually 70 to 170°C, and the draw ratio is usually 3.0 to 7 times and preferably 3.5 to 6 times. Successively, the resulting biaxially drawn sheet is heat-set at a temperature of 180 to 270°C under a tension or under relaxation within 30% to obtain a biaxially oriented film. Upon the above drawing steps, there may also be used the method in which the drawing in each direction is carried out in two or more stages. In such a case, the multi-stage drawing is preferably performed such that the total draw ratio in each of the two directions finally falls within the above-specified range.

Also, upon producing the polyester film, there may also be used a simultaneous biaxial drawing method. The simultaneous biaxial drawing method is such a method in which the above undrawn sheet is drawn and oriented in both of the machine and width directions at the same time while maintaining the sheet in a suitable temperature-controlled condition at a temperature of usually 70 to 120°C and preferably 80 to 110°C. The draw ratio used in the simultaneous biaxial drawing method is 4 to 50 times, preferably 7 to 35 times and more preferably 10 to 25 times in terms of an area ratio of the sheet to be drawn. Successively, the obtained biaxially drawn sheet is heat-set at a temperature of 170 to 250°C under a tension or under relaxation within 30% to obtain a drawn oriented film. As the apparatus used in the above simultaneous biaxial drawing method, there may be employed any conventionally known drawing apparatuses such as a screw type drawing apparatus, a pantograph type drawing apparatus and a linear drive type drawing apparatus.

Next, the method of forming the coating layer constituting the coated film according to the present invention is explained. The coating layer may be formed either by an in-line coating method in which the surface of the polyester film is subjected to coating treatment during the film-forming step of the polyester film, or by an off-line coating method in which the polyester film produced is once transferred to an outside of the film production system and subjected to coating treatment. Among these methods, the in-line coating method is preferably used because the coating layer can be produced simultaneously with formation of the polyester film and therefore at low costs.

For example, in the case of a sequential biaxial drawing process, the in-line coating treatment may be carried out, in particular, after completion of the longitudinal drawing but before initiation of the lateral drawing, although the present invention is not particularly limited thereto. When the coating layer is formed on the polyester film by the in-line coating method, the coating can be carried out simultaneously with formation of the polyester film, and the coating layer can be treated at a high temperature when subjecting the drawn polyester film to the heat-setting step, so that the resulting coated film can be enhanced in performance such as an adhesion property to various surface functional layers to be formed on the coating layer as well as a wet heat resistance of the resulting film, etc. Also, when the coating step is conducted before drawing the polyester film, the thickness of the coating layer may be changed by adjusting a draw ratio of the film, so that the thin-film coating step can be more easily conducted as compared to the off-line coating method. Thus, by using the in-line coating method, in particular, by conducting the in-line coating method before the drawing, it is possible to produce a film suitable as the polyester film used in the present invention.

It is essentially required that the coated film of the present invention comprises the polyester film and a coating layer formed on at least one surface of the polyester film which is prepared from a coating solution comprising a metal oxide and two or more crosslinking agents, in which the coating layer has an absolute reflectance having one minimum value in a wavelength range of 400 to 800 nm, and the absolute reflectance at the minimum value is not less than 4.0%.

The coating layer is designed such that after forming a surface functional layer such as a heard coat layer thereon, the resulting film is prevented from suffering from occurrence of interference fringes owing to external light, and is provided to enhance an adhesion property to the surface functional layer.

The metal oxide is used mainly for the purpose of controlling a refractive index of the coating layer. In particular, since the resin used in the coating layer has a low refractive index, the use of the metal oxide having a high refractive index is preferred, and the use of the metal oxide having a refractive index of not less than 1.7 is more preferred. Specific examples of the metal oxide include zirconium oxide, titanium oxide, tin oxide, yttrium oxide, antimony oxide, indium oxide, zinc oxide, antimony tin oxide and indium tin oxide. These metal oxides may be used alone or in combination of any two or more thereof. Among these metal oxides, preferred are zirconium oxide and titanium oxide. In particular, zirconium oxide is more preferred from the standpoint of imparting a good weather resistance to the coating layer.

The metal oxide tends to have a fear of causing deterioration in adhesion property of the coating layer depending upon its configuration upon use. Therefore, the metal oxide is preferably used in the form of particles. In addition, from the standpoint of a good transparency of the coating layer, the average particle diameter of the metal oxide is preferably not more than 100 nm, more preferably not more than 50 nm, and still more preferably not more than 25 nm.

The two or more crosslinking agents are used for the purpose of enhancing an adhesion property of the coating layer to a surface functional layer such as a hard coat layer to be formed on the coating layer. It has been found that even by incorporating only one kind of crosslinking agent in the coating layer, it was possible to enhance an adhesion property of the coating layer. In addition, it has been found that by using combination of two or more crosslinking agents, the resulting coating layer is further improved in adhesion property, in particular, improved in adhesion property after subjected to a wet heat test.

Examples of the crosslinking agent include an oxazoline compound, an epoxy compound, a melamine compound, an isocyanate-based compound, a carbodiimide-based compound and a silane coupling compound. Among these compounds, in view of a good adhesion property of the coating layer, especially preferred are an oxazoline compound and an epoxy compound, and more preferred is a combined use of an oxazoline compound and an epoxy compound.

As the oxazoline compound, there are preferably used, in particular, polymers having an oxazoline group which may be produced in the form of a homopolymer of an addition-polymerizable oxazoline group-containing monomer or a copolymer of the addition-polymerizable oxazoline group-containing monomer with the other monomer. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. These oxazoline compounds may be used alone or in the form of a mixture of any two or more thereof. Among these oxazoline compounds, 2-isopropenyl-2-oxazoline is more preferred because of good industrial availability thereof. The other monomers used in the copolymer are not particularly limited as long as they are copolymerizable with the addition-polymerizable oxazoline group-containing monomer. Examples of the other monomers include (meth)acrylic acid esters such as alkyl (meth)acrylates (in which the alkyl group may be methyl, ethyl, n-propyl, isopropyl, n-butyl, isobutyl, t-butyl, 2-ethylhexyl or cyclohexyl); unsaturated carboxylic acids such as acrylic acid, methacrylic acid, itaconic acid, maleic acid, fumaric acid, crotonic acid, styrenesulfonic acid and salts thereof (such as sodium salts, potassium salts, ammonium salts and tertiary amine salts); unsaturated nitriles such as acrylonitrile and methacrylonitrile; unsaturated amides such as (meth)acrylamide, N-alkyl (meth)acrylamide and N,N-dialkyl (meth)acrylamide (in which the alkyl group may be methyl, ethyl, n-propyl, isopropyl, n-butyl, isobutyl, t-butyl, 2-ethylhexyl or cyclohexyl); vinyl esters such as vinyl acetate and vinyl propionate; vinyl ethers such as methyl vinyl ether and ethyl vinyl ether; α-olefins such as ethylene and propylene; halogen-containing α,β-unsaturated monomers such as vinyl chloride, vinylidene chloride and vinyl fluoride; and α,β-unsaturated aromatic monomers such as styrene and α-methyl styrene. These other monomers may be used alone or in combination of any two or more thereof.

Examples of the epoxy compound include condensates of epichlorohydrin with a hydroxyl group of ethylene glycol, polyethylene glycol, glycerol, polyglycerol, bisphenol A, etc., or an amino group. Examples of the epoxy compound include polyepoxy compounds, diepoxy compounds, monoepoxy compounds and glycidyl amine compounds. Specific examples of the polyepoxy compounds include sorbitol polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylolpropane polyglycidyl ether. Specific examples of the diepoxy compounds include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Specific examples of the monoepoxy compounds include allyl glycidyl ether, 2-ethylhexyl glycidyl ether and phenyl glycidyl ether. Specific examples of the glycidyl amine compounds include N,N,N',N'-tetraglycidyl-m-xylylenediamine and 1,3-bis(N,N-diglycidylamino)cyclohexane.

Examples of the melamine compounds include alkylolated melamine derivatives, partially or completely etherified compounds obtained by reacting the alkylolated melamine derivative with an alcohol, and mixtures of these compounds. Examples of the alcohol suitably used for the above etherification include methyl alcohol, ethyl alcohol, isopropyl alcohol, n-butanol and isobutanol. The melamine compound may be in the form of either a monomer or a dimer or higher polymer, or may be in the form of a mixture thereof. In addition, there may also be used those compounds obtained by co-condensing a urea or the like to a part of melamine. Further, a catalyst may also be used to enhance a reactivity of the melamine compound.

The isocyanate-based compound means an isocyanate or a compound having an isocyanate derivative structure such as typically a blocked isocyanate. Examples of the isocyanate include aromatic isocyanates such as tolylene diisocyanate, xylylene diisocyanate, methylene diphenyl diisocyanate, phenylene diisocyanate and naphthalene diisocyanate; aromatic ring-containing aliphatic isocyanates such as α,α,α',α'-tetramethyl xylylene diisocyanate; aliphatic isocyanates such as methylene diisocyanate, propylene diisocyanate, lysine diisocyanate, trimethyl hexamethylene diisocyanate and hexamethylene diisocyanate; and alicyclic isocyanates such as cyclohexane diisocyanate, methyl cyclohexane diisocyanate, isophorone diisocyanate, methylene-bis(4-cyclohexyl isocyanate) and isopropylidene dicyclohexyl diisocyanate. Further examples of the isocyanate include polymers and derivatives of these isocyanates such as biuret compounds, isocyanurate compounds, uretdione compounds and carbodiimide-modified compounds of these isocyanates. These isocyanates may be used alone or in combination of any two or more thereof. Among these isocyanates, from the viewpoint of preventing occurrence of yellowing owing to ultraviolet radiation, aliphatic isocyanates and alicyclic isocyanates are more suitably used as compared to aromatic isocyanates.

When the isocyanate compound is used in the form of a blocked isocyanate, examples of blocking agents used for production thereof include bisulfites; phenol-based compounds such as phenol, cresol and ethyl phenol; alcohol-based compounds such as propylene glycol monomethyl ether, ethylene glycol, benzyl alcohol, methanol and ethanol; active methylene-based compounds such as dimethyl malonate, diethyl malonate, methyl acetoacetate, ethyl acetoacetate and acetyl acetone; mercaptan-based compounds such as butyl mercaptan and dodecyl mercaptan; lactam-based compounds such as ε-caprolactam and δ-valerolactam; amine-based compounds such as diphenyl aniline, aniline and ethylene imine; acid amide compounds such as acetanilide and acetic acid amide; and oxime-based compounds such as formaldehyde, acetaldoxime, acetone oxime, methyl ethyl ketone oxime and cyclohexanone oxime. These blocking agents may be used alone or in combination of any two or more thereof.

In addition, the above isocyanate-based compounds may be used in the form of a single substance or in the form of a mixture with various polymers or a bonded product therewith. The isocyanate-based compounds are preferably used in the form of a mixture or a bonded product with polyester resins or urethane resins from the standpoint of improving a dispersibility or a crosslinking reactivity of the isocyanate-based compounds.

The carbodiimide-based compound is used, in particular, for enhancing an adhesion property of the coating layer to a surface functional layer such as a hard coat layer which may be formed on the coating layer, etc., as well as a wet heat resistance of the coating layer. The preferred carbodiimide-based compound includes a polycarbodiimide compound comprising two or more carbodiimide structures or carbodiimide derivative structures in a molecule thereof in view of a good adhesion property or the like of the coating layer.

The carbodiimide-based compound may be synthesized by conventionally known techniques. In general, the carbodiimide-based compound may be obtained by a condensation reaction of a diisocyanate compound. The diisocyanate compound is not particularly limited, and may be either an aromatic diisocyanate or an aliphatic diisocyanate. Specific examples of the diisocyanate compound include tolylene diisocyanate, xylene diisocyanate, diphenylmethane diisocyanate, phenylene diisocyanate, naphthalene diisocyanate, hexamethylene diisocyanate, trimethyl hexamethylene diisocyanate, cyclohexane diisocyanate, methyl cyclohexane diisocyanate, isophorone diisocyanate, dicyclohexyl diisocyanate and dicyclohexylmethane diisocyanate.

Further, in order to improve a water solubility or a water dispersibility of the polycarbodiimide-based compound, a surfactant or a hydrophilic monomer such as a polyalkyleneoxide, a quaternary ammonium salt of a dialkylamino alcohol and a hydroxyalkyl sulfonic acid salt may be added thereto unless the addition thereof eliminates the effects of the present invention.

Meanwhile, these crosslinking agents are used for improving a performance of the coating layer by allowing the crosslinking agents to react with the compounds contained therein during a drying step or a film-forming step thereof. Therefore, it is estimated that the resulting coating layer comprises the unreacted crosslinking agent, compounds obtained after the reaction, or a mixture thereof.

Upon forming the coating layer, in order to improve a coating appearance of the obtained coating layer, prevent occurrence of interference fringes when laminating various surface functional layers such as a hard coat layer on the coating layer, and enhance a transparency and an adhesion property thereof, various polymers are preferably further used therein.

Specific examples of the various polymers include polyester resins, acrylic resins, urethane resins, polyvinyl resins (such as polyvinyl alcohol, polyvinyl chloride and vinyl chloride-vinyl acetate copolymers), polyalkylene glycols, polyalkylene imines, methyl cellulose, hydroxy cellulose, starches, etc. Among these polymers, in view of improving an adhesion property of the coating layer to the surface functional layers such as a hard coat layer and enhancing an appearance of the coating surface, preferred are polyester resins, acrylic resins and urethane resins. In addition, more preferred are polyester resins from such a viewpoint that a large number of aromatic compounds such as a benzene ring can be incorporated in a molecule of the polyester resins to thereby enhance a refractive index of the resulting polyester resins.

The polyester resins may be those polyester resins produced, for example, from the following polycarboxylic acids and polyhydroxy compounds as main constituents. More specifically, as the polycarboxylic acids, there may be used terephthalic acid, isophthalic acid, orthophthalic acid, phthalic acid, 4,4'-diphenyldicarboxylic acid, 2,5-naphthalenedicarboxylic acid, 1,5-naphthalenedicarboxylic acid, 2,6-naphthalenedicarboxylic acid, 2,7-naphthalenedicarboxylic acid, 1,4-cyclohexanedicarboxylic acid, 2-potassium sulfo-terephthalic acid, 5-sodium sulfoisophthalic acid, adipic acid, azelaic acid, sebacic acid, dodecanedicarboxylic acid, glutaric acid, succinic acid, trimellitic acid, trimesic acid, pyromellitic acid, trimellitic anhydride, phthalic anhydride, p-hydroxybenzoic acid, trimellitic acid monopotassium salt and ester-forming derivatives thereof. Examples of the polyhydroxy compounds include ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexane dimethanol, p-xylylene glycol, an adduct of bisphenol A with ethylene glycol, diethylene glycol, triethylene glycol, polyethylene glycol, polypropylene glycol, polytetramethylene glycol, polytetramethylene oxide glycol, dimethylol propionic acid, glycerin, trimethylol propane, sodium dimethylol ethyl sulfonate and potassium dimethylol propionate. The polyester resins may be synthesized by subjecting one or more compounds appropriately selected from the aforementioned polycarboxylic acids and one or more compounds appropriately selected from the aforementioned polyhydroxy compounds to polycondensation reaction by an ordinary method.

In addition, in order to further readily control a refractive index of the coating layer, it is preferable to use a compound having a condensed polycyclic aromatic structure as shown in the following formulae, such as naphthalene, anthracene, phenanthrene, naphthacene, benzo[a]anthracene, benzo[a]phenanthrene, pyrene, benzo[c]phenanthrene and perylene in combination with the above components in the coating layer.

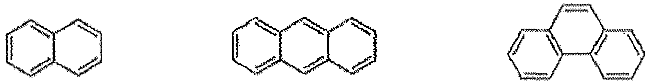

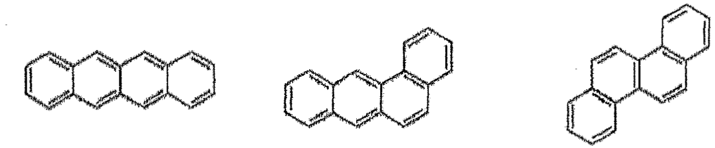

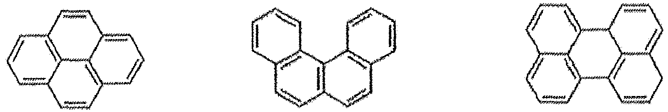

In view of a good coatability on the polyester film, the compound having a condensed polycyclic aromatic structure is preferably in the form of a polymer compound, for example, a polyester resin, an acrylic resin or a urethane resin. Among these resins, the polyester resin is more preferred because a larger number of the condensed polycyclic aromatic structures can be introduced into the polyester resin.

As the method of incorporating the condensed polycyclic aromatic structure into the polyester resin, there may be used, for example, the method of introducing two or more hydroxyl groups as substituent groups into the condensed polycyclic aromatic structure to provide a diol component or a polyhydroxyl group component, or the method of introducing two or more carboxyl groups as substituent groups into the condensed polycyclic aromatic structure to provide a dicarboxylic acid component or a polycarboxylic acid component.

From the standpoint of hardly suffering from undesirable coloration during the process for producing the coated film, compounds having a naphthalene skeleton are preferably used as the compound having a condensed polycyclic aromatic structure to be incorporated in the coating layer. Also, in view of a good adhesion property of the coating layer to various surface functional layers formed on the coating layer and a good transparency of the resulting film, those resins into which the naphthalene skeleton is incorporated can be suitably used as a constituent of the polyester. Typical examples of the naphthalene skeleton include 1,5-naphthalenedicarboxylic acid, 2,6-naphthalenedicarboxylic acid and 2,7-naphthalenedicarboxylic acid.

Meanwhile, the condensed polycyclic aromatic structure may be substituted with not only a hydroxyl group or a carboxyl group, but also a substituent group comprising a sulfur element, an aromatic substituent group such as a phenyl group, a halogen element group or the like, whereby it is expected to enhance a refractive index of the resulting coating layer. From the viewpoint of a good coatability and a good adhesion property, the substituent group such as an alkyl group, an ester group, an amide group, a sulfonic group, a carboxyl group and a hydroxyl group may be introduced into the condensed polycyclic aromatic structure.

Also, for the purpose of improving a fixing property and a slipping property of the coating layer, particles other than the above metal oxide may be included in the coating layer. The average particle diameter of the particles is preferably not more than 1.0 µm, more preferably not more than 0.5 µm and still more preferably not more than 0.2 µm from the viewpoint of a good transparency of the resulting film. Specific examples of the particles used in the coating layer include silica, alumina, kaolin, calcium carbonate, organic particles or the like.

Further, the coating layer may also comprise various additives such as a defoaming agent, a coatability improver, a thickening agent, an organic lubricant, an antistatic agent, an ultraviolet absorber, an antioxidant, a foaming agent, a dye and a pigment, if required, unless the subject matter of the present invention is adversely affected by the addition thereof.

The content of the metal oxide in the coating solution forming the coating layer is 3 to 70% by weight, preferably 5 to 50% by weight, more preferably 5 to 40% by weight and still more preferably 8 to 30% by weight based on a total amount of whole non-volatile components in the coating solution. When the content of the metal oxide in the coating solution is less than 3% by weight, the obtained coating layer may fail to exhibit a sufficiently high refractive index, so that the resulting film tends to be hardly improved in occurrence of interference fringes. When the content of the metal oxide in the coating solution is more than 70% by weight, the obtained coating layer tends to be deteriorated in transparency.

The content of the two or more crosslinking agents in the coating solution forming the coating layer is usually 2 to 80% by weight, preferably 4 to 60% by weight and more preferably 10 to 40% by weight based on a total amount of whole non-volatile components in the coating solution. When the content of the crosslinking agents in the coating solution is out of the above-specified range, there tends to occur such a fear that the resulting coating layer is deteriorated in adhesion property to a surface functional layer such as a hard coat layer, the coating layer tends to be deteriorated in coating appearance, or the resulting film tends to be deteriorated in visibility owing to occurrence of interference fringes after forming the surface functional layer such as a hard coat layer on the coating layer.

In the case where an oxazoline compound is used as the crosslinking agent, the content of the oxazoline compound in the coating solution forming the coating layer is usually 1 to 50% by weight, preferably 1 to 30% by weight and more preferably 3 to 20% by weight based on a total amount of whole non-volatile components in the coating solution. When the content of the oxazoline compound in the coating solution is less than 1% by weight, there tends to occur such a fear that the obtained coating layer is deteriorated in adhesion property to a surface functional layer such as a hard coat layer. When the content of the oxazoline compound in the coating solution is more than 50% by weight, the obtained coating layer tends to exhibit a low refractive index, so that the resulting film tends to be deteriorated in visibility owing to occurrence of interference fringes after forming a surface functional layer such as a hard coat layer on the coating layer.

In the case where an epoxy compound is used as the crosslinking agent, the content of the epoxy compound in the coating solution forming the coating layer is usually 1 to 50% by weight, preferably 3 to 30% by weight and more preferably 5 to 20% by weight based on a total amount of whole non-volatile components in the coating solution. When the content of the epoxy compound in the coating solution is out of the above-specified range, there tends to occur such a fear that the obtained coating layer is deteriorated in adhesion property to a surface functional layer such as a hard coat layer, or the coating layer tens to be deteriorated in coating appearance.

The content of the condensed polycyclic aromatic structure in the compound having a condensed polycyclic aromatic structure is usually 5 to 80% by weight and preferably 10 to 60% by weight. In the case where the compound having a condensed polycyclic aromatic structure is used for forming the coating layer, the content of the compound having a condensed polycyclic aromatic structure in the coating solution for forming the coating layer is usually 5 to 80% by weight, preferably 5 to 70% by weight and more preferably 10 to 50% by weight based on a total amount of whole non-volatile components in the coating solution. When the compound having a condensed polycyclic aromatic structure is used within such a specific range, the refractive index of the coating layer can be readily adjusted, and the coating layer can be readily prevented from suffering from occurrence of interference fringes after forming a surface functional layer such as a hard coat layer on the coating layer. Meanwhile, the content of the condensed polycyclic aromatic structure in the compound having a condensed polycyclic aromatic structure may be determined as follows. That is, the coating layer is dissolved and extracted, for example, in a suitable solvent or warm water, and the obtained extract is fractionated by chromatography and subjected to structural analysis by NMR or IR, and further subjected to pyrolysis GC-MS (gas chromatography-mass spectrometry), an optical analysis or the like to thereby determine the content of the condensed polycyclic aromatic structure in the compound.

The analysis of the components contained in the coating layer may be conducted, for example, by analysis method such as TOF-SIMS, ESCA and fluorescent X-ray.

When forming the coating layer by the in-line coating method, the coated film is preferably produced by the method in which an aqueous solution or a water dispersion comprising a series of the above mentioned compounds is prepared as a coating solution having a concentration of about 0.1 to about 50% by weight in terms of a solid content thereof, and the thus prepared coating solution is applied onto the polyester film. The coating solution may also comprise a small amount of an organic solvent for the purpose of improving a dispersibility in water, a film-forming property, etc., unless the subject matter of the present invention is adversely affected thereby. The organic solvents may be used alone, or may be appropriately used in the form of a mixture of any two or more thereof.

The film thickness of the coating layer is in the range of 0.04 to 0.20 µm and preferably 0.07 to 0.15 µm. When the film thickness of the coating layer is out of the above-specified range, the resulting film tends to be deteriorated in visibility owing to occurrence of interference fringes after laminating a surface functional layer on the coating layer.

As the method of forming the coating layer, there may be used conventionally known coating methods such as a reverse gravure coating method, a direct gravure coating method, a roll coating method, a die coating method, a bar coating method and a curtain coating method.

The drying and curing conditions used upon forming the coating layer on the polyester film are not particularly limited. For example, in the case where the coating layer is formed by an off-line coating method, the coating layer may be subjected to heat-setting usually at a temperature of 80 to 200°C for 3 to 40 sec and preferably at a temperature of 100 to 180°C for 3 to 40 sec.

On the other hand, in the case where the coating layer is formed by an in-line coating method, the coating layer may be subjected to heat-setting usually at a temperature of 70 to 280°C for 3 to 200 sec.

In any of the off-line coating and in-line coating methods, the heat-setting may be used in combination with irradiation with active energy rays such as irradiation with ultraviolet rays, if required. The polyester film constituting the coated film of the present invention may be previously subjected to surface treatments such as corona treatment and plasma treatment.

The coating layer used in the present invention is suitably controlled in its refractive index in order to suppress occurrence of interference fringes, more specifically, is designed such that the refractive index (1.55 to 1.65) of the coating layer is near a geometrical mean value of a refractive index (1.60 to 1.70) of the polyester film as the base material and a refractive index (1.45 to 1.65) of the surface functional layer such as a hard coat layer. The refractive index of the coating layer has a close relationship with a reflectance of the coating layer. In the present invention, the absolute reflectance of the coating layer is adjusted such that when preparing a graph by plotting a wavelength on an abscissa axis thereof and a reflectance on an ordinate axis thereof, one minimum value of the reflectance must be observed on a characteristic curve thereof in the wavelength range of 400 to 800 nm, and the absolute reflectance at the minimum value of the coating layer is not less than 4.0%. Within the range of the absolute reflectance as defined in the present invention, if the minimum value is observed in the same wavelength range, the reflectance at the minimum value becomes a higher value as the refractive index thereof increases, and becomes a lower value as the refractive index thereof decreases. The absolute reflectance of the coating layer is preferably controlled such that one minimum value thereof is present in the wavelength range of 500 to 700 nm. The reflectance value at the minimum value preferably lies within the range of 4.0 to 6.5% and more preferably 4.5 to 6.2%.

In the case where only one minimum value of the absolute reflectance is not present in the wavelength range of 400 to 800 nm or in the case where the absolute reflectance at the minimum value is out of the above-specified range, interference fringes tend to be caused after forming the surface functional layer such as a hard coat layer on the coating layer, so that the resulting film tends to be deteriorated in visibility.

In general, in the coated film according to the present invention, the surface functional layer such as a hard coat layer may be provided on the coating layer. The material used in the hard coat layer is not particularly limited. Examples of the material for the hard coat layer include cured products of monofunctional (meth)acrylates, polyfunctional (meth)acrylates and reactive silicon compounds such as tetraethoxysilane. Among these materials, from the viewpoint of satisfying both a good productivity and a high hardness, especially preferred are cured products obtained by polymerizing compositions comprising ultraviolet-curable polyfunctional (meth)acrylates.

The compositions comprising the above ultraviolet-curable polyfunctional (meth)acrylates are not particularly limited. For example, there may be used a composition prepared by mixing one or more kinds of conventionally known ultraviolet-curable polyfunctional (meth)acrylates, a composition commercially available as an ultraviolet-curable hard coat material, or a composition prepared by further adding the other components to the above compositions in such a range that the effects and objects of the present invention are not adversely influenced thereby.

The ultraviolet-curable polyfunctional (meth)acrylates are not particularly limited. Examples of the ultraviolet-curable polyfunctional (meth)acrylates include (meth)acrylic derivatives of polyfunctional alcohols such as dipentaerythritol hexa(meth)acrylate, tetramethylol methane tetra(meth)acrylate, tetramethylol methane tri(meth)acrylate, trimethylol propane tri(meth)acrylate, 1,6-hexanediol di(meth)acrylate and 1,6-bis(3-acryloyloxy-2-hydroxypropyloxy)hexane; polyethylene glycol di(meth)acrylate; and polyurethane (meth)acrylate.

The other components which may be contained in the compositions comprising the ultraviolet-curable polyfunctional (meth)acrylates are not particularly limited. Examples of the other components include inorganic or organic fine particles, a polymerization initiator, a polymerization inhibitor, an antioxidant, an antistatic agent, a dispersant, a surfactant, a light stabilizer and a leveling agent. In addition, when drying the film formed by a wet coating method, an optional amount of a solvent may be added to the compositions, if required.

As the method of forming the hard coat layer by using an organic material, there may be adopted general wet coating methods such as a roll coating method and a die coating method. The thus formed hard coat layer may be subjected to curing reaction, if required, by heating or by irradiating an active energy ray such as an ultraviolet ray and an electron beam thereto. Meanwhile, the refractive index of the surface functional layer formed on the coating layer is generally 1.45 to 1.65 as described above.

### EXAMPLES

The present invention is described in more detail below by Examples. However, these Examples are only illustrative and not intended to limit the present invention thereto. In addition, the measuring and evaluating methods used in the present invention are as follows.

### (1) Method of measuring intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

### (2) Method of measuring average particle diameter of particles incorporated in polyester film:

The surface of the polyester film was observed using a laser microscope ("OSL-3000" manufactured by Olympus Corp.), major axis diameters and minor axis diameters of particles in the polyester film were measured to obtain an average value thereof as a particle diameter thereof, and an average value of particles diameters of the 10 particles was defined as an average particle diameter of the particles.

### (3) Center line average roughness (Ra) of suface of film:

Using a surface roughness meter "SE-3F" manufactured by Kosaka Laboratory Ltd., the center line average roughness (Ra) of the surface of the film was measured in a measuring length of 2.5 mm according to JIS B0601-1994. When Ra of the film is less than 3 nm, the film tends to exhibit a poor slip property. The center line average roughness (Ra) of the surface of the film is preferably not less than 4 nm.

### (4) Method of evaluating slip property:

Polyester films were overlapped and slipped over each other with fingers. The results were evaluated according to the following ratings.
A: Readily slipped; and
B: Poor slip property, i.e., hardly or not slipped.

### (5) Method of evaluating transparency:

The film was observed under light from a three band fluorescent lamp. The results were evaluated according to the following ratings.
A: No traces of particles (spots owing to the particles present in the film) were observed, and clear feeling was attained; and
B: Traces of particles were present, and the film was observed whitely.

### (6) Method of measuring average particle diameter of particles incorporated in coating layer:

Using TEM ("H-7650" manufactured by Hitachi High-Technologies Corp.; accelerated voltage: 100 V), the coating layer was observed to measure particle diameters of 10 particles therein and calculate an average particle diameter thereof from an average value of the thus measured ten values.

### (7) Method of measuring film thickness of coating layer:

The surface of the coating layer was dyed with RuO₄, and the resulting film was embedded in an epoxy resin. Thereafter, the resin-embedded film was cut into a piece by an ultrathin sectioning method, and the cut piece was dyed with RuO₄ to observe and measure a cut section of the coating layer using TEM ("H-7650" manufactured by Hitachi High-Technologies Corp.; accelerated voltage: 100 V).

### (8) Method of evaluating absolute reflectance from surface of coating layer formed on polyester film:

A black tape (a vinyl tape "VT-50" produced by Nichiban Co., Ltd.) was previously attached to a back surface of a polyester film which was opposite to its surface to be measured, and the surface of a coating layer formed on the polyester film was subjected to measurement for an absolute reflectance thereof in a wavelength range of 300 to 800 nm using a spectrophotometer (an ultraviolet/visible spectrophotometer "V-570" and an automatic absolute reflectance analyzer "ARM-500N" both manufactured by JASCO Corp.) under the conditions of a synchronous mode; incident angle: 5°; N-polarization; response: Fast; data sampling interval: 1.0 nm; band width: 10 nm; and scanning speed: 1000 m/min, to thereby evaluate a wavelength at a minimum value of a reflectance (bottom wavelength) as well as the reflectance.

### (9) Method of evaluating interference fringes:

A coating solution prepared by mixing 72 parts by weight of dipentaerythritol hexaacrylate, 18 parts by weight of 2-hydroxy-3-phenoxypropyl acrylate, 10 parts by weight of antimony pentaoxide, 1 part by weight of a photopolymerization initiator ("IRGACURE 184" (tradename) produced by Ciba Specialty Chemicals Corp.) and 200 parts by weight of methyl ethyl ketone was applied on the coating layer formed on the polyester film such that a coating thickness thereof after drying was 5 µm, and cured by irradiating an ultraviolet ray thereto to thereby form a hard coat layer. The resulting film was visually observed under irradiation with light using a three band fluorescent lamp to determine whether or not any interference fringes were recognized. The observation results were evaluated according to the following ratings:
A: No interference fringes were recognized.
B: Thin and scattered interference fringes were recognized.
C: Thin but linear interference fringes were recognized.
D: Clear interference fringes were recognized.

### (10) Method of evaluating adhesion property of coating layer:

In order to evaluate an adhesion property of the coating layer more strictly, studies have been conducted using a material obtained by excluding antimony pentaoxide from the hard coat solution used in the above evaluation (9). More specifically, a coating solution prepared by mixing 80 parts by weight of dipentaerythritol hexaacrylate, 20 parts by weight of 2-hydroxy-3-phenoxypropyl acrylate, 5 part by weight of a photopolymerization initiator ("IRGACURE 184" (tradename) produced by Ciba Specialty Chemicals Corp.) and 200 parts by weight of methyl ethyl ketone was applied on the coating layer formed on the polyester film such that a coating thickness thereof after drying was 5 µm, and cured by irradiating an ultraviolet ray thereto to thereby form a hard coat layer. The thus obtained film was allowed to stand under environmental conditions of 80°C and 90% RH for 100 hr. Thereafter, the resulting hard coat layer was subjected to cross-cutting to form 100 (10 x 10) cross-cuts thereon. A 18 mm-wide tape ("Cellotape (registered trademark) CT-18" produced by Nichiban Co., Ltd.) was attached onto the thus cross-cut hard coat layer, and then rapidly peeled off therefrom at a peel angle of 180°. Then, the surface of the hard coat layer from which the tape was peeled off was observed to measure an area of the hard coat layer peeled off together with the tape. The evaluation ratings are as follows.
A: Peeled area of the hard coat layer was less than 3%.
B: Peeled area of the hard coat layer was not less than 3% but less than 10%.
C: Peeled area of the hard coat layer was not less than 10% but less than 50%.
D: Peeled area of the hard coat layer was not less than 50%.

The polyesters used in the respective Examples and Comparative Examples were prepared by the following methods.

### <Method for producing polyester (A)>

One hundred parts by weight of dimethyl terephthalate and 60 parts by weight of ethylene glycol as well as ethyl acid phosphate and magnesium acetate tetrahydrate as a catalyst in amounts of 30 ppm and 100 ppm, respectively, based on the polyester to be produced, were subjected to esterification reaction at 260°C in a nitrogen atmosphere. Successively, tetrabutyl titanate in an amount of 50 ppm based on the polyester to be produced was added to the reaction solution. While heating the resulting mixture to 280°C over 2 hr and 30 min, the pressure of the reaction system was reduced to an absolute pressure of 0.3 kPa, and further the mixture was subjected to melt-polycondensation for 80 min, thereby obtaining a polyester (A) having an intrinsic viscosity of 0.63.

### <Method for producing polyester (B)>

One hundred parts by weight of dimethyl terephthalate and 60 parts by weight of ethylene glycol as well as magnesium acetate tetrahydrate as a catalyst in an amount of 900 ppm based on the polyester to be produced, were subjected to esterification reaction at 225°C in a nitrogen atmosphere. Successively, orthophosphoric cid and germanium dioxide in amounts of 3500 ppm and 70 ppm, respectively, based on the polyester to be produced, were added to the reaction solution. While heating the resulting mixture to 280°C over 2 hr and 30 min, the pressure of the reaction system was reduced to an absolute pressure of 0.4 kPa, and further the mixture was subjected to melt-polycondensation for 85 min, thereby obtaining a polyester (B) having an intrinsic viscosity of 0.64.

### <Method for producing polyester (C)>

The same procedure as used in the above method for producing the polyester (A) was conducted except that the below-mentioned particles X were added in an amount of 0.5% by weight before conducting the melt-polycondensation, thereby obtaining a polyester (C).

### <Method for producing polyester (D)>

The same procedure as used in the above method for producing the polyester (A) was conducted except that the below-mentioned particles Y were added in an amount of 0.5% by weight before conducting the melt-polycondensation, thereby obtaining a polyester (D).

Examples of the particles incorporated in the polyester film are as follows.

### •Particles X:

Organic particles of a copolymer of styrene and vinyl benzene comprising aluminum oxide and having an average particle diameter of 1.4 µm.

### •Particles Y:

Silica particles having an average particle diameter of 3.2 µm

Examples of the compounds constituting the coating layer are as follows.

### (Examples of compounds)

### •Metal oxide: (IA)

Zirconium oxide particles having an average particle diameter of 15 nm

### •Metal oxide: (IB)

Titanium oxide particles having an average particle diameter of 15 nm

### •Oxazoline compound (IIA):

Acrylic polymer having an oxazoline group and a polyalkyleneoxide chain "EPOCROSS WS-500" (produced by Nippon Shokubai Co., Ltd.; a polymer of a type comprising 1-methoxy-2-propanol solvent in an amount of about 38% by weight).

### •Oxazoline compound (IIB):

Acrylic polymer having an oxazoline group and a polyalkyleneoxide chain "EPOCROSS WS-700" (produced by Nippon Shokubai Co., Ltd.; VOC-free type).

### •Epoxy compound (IIIA):

Polyglycerol polyglycidyl ether "DECONAL EX-521" (produced by Nagase Chemtex Co., Ltd.)

### •Epoxy compound (IIIB):

Epoxy resin "DECONAL EX-1410" (produced by Nagase Chemtex Co., Ltd.)

### •Polyester resin having a condensed polycyclic aromatic structure (IVA):

Water dispersion of a polyester resin obtained by copolymerizing the following composition:
Monomer composition: (acid component) 2,6-naphthalenedicarboxylic acid/5-sodium sulfoisophthalic acid//(diol component) ethylene glycol/diethylene glycol = 92/8//80/20 (mol%)

### •Polyester resin (IVB):

Water dispersion of a polyester resin obtained by polymerizing the following composition:
Monomer composition: (acid component) terephthalic acid/isophthalic acid/5-sodium sulfoisophthalic acid//(diol component) ethylene glycol/1,4-butanediol/diethylene glycol = 56/40/4//70/20/10 (mol%)

### Acrylic resin (IVC):

Water dispersion of an acrylic resin obtained by polymerizing the following composition:
Emulsion polymer (emulsifier: anionic surfactant) produced from ethyl acrylate/n-butyl acrylate/methyl methacrylate/N-methylol acrylamide/acrylic acid = 65/21/10/2/2 (% by weight)

### •Urethane resin (IVD):

Carboxylic acid-water-dispersed type polyester polyurethane resin "HYDRAN AP-40" (produced by DIC Corp.)

### •Hexamethylene tetramine (V):

### •Particles (VIA):

Silica particles having an average particle diameter of 0.07 µm

### •Particles (VIB):

Silica particles having an average particle diameter of 0.15 µm

### Example 1:

A mixed raw material (content of particles: 250 ppm) obtained by mixing the polyesters (A), (B) and (C) in amounts of 90%, 5% and 5%, respectively, as a raw material for outermost layers (surface layers), and a mixed raw material obtained by mixing the polyesters (A) and (B) in amounts of 95% and 5%, respectively, as a raw material for an intermediate layer, were respectively charged into two extruders, melted therein at 285°C, and then co-extruded therefrom on a chilled roll whose surface was controlled to a temperature of 40°C into a two-kind/three-layer structure (surface layer/intermediate layer/surface layer = 1:31:1 as output; so designed as to form a surface layer having a thickness of 3.8 µm), followed by cooling and solidifying the thus extruded sheet on the chilled roll, thereby obtaining an undrawn sheet (film condition 1 as shown in Table 1). Next, the thus obtained undrawn sheet was drawn utilizing a difference between peripheral speeds of rolls at 85°C at a draw ratio of 3.4 times in a longitudinal direction thereof. Thereafter, a coating solution 3 shown in the below-mentioned Table 2 was applied on both surfaces of the thus obtained longitudinally drawn sheet. Then, the resulting coated sheet was introduced into a tenter where the sheet was drawn at 120°C at a draw ratio of 4.0 times in a lateral direction thereof and then heat-set at 225°C. Next, the obtained drawn sheet was relaxed by 2% in a lateral direction thereof, thereby obtaining a polyester film having a thickness of 125 µm which was provided on both surfaces thereof with a coating layer having a thickness of 0.10 µm (after dried). As a result of evaluating the thus obtained polyester film, it was confirmed that the polyester film exhibited good slip property, transparency and adhesion property, and was free from occurrence of interference fringes. The properties of the thus obtained film are shown in Table 3.

### Examples 2 to 26:

The same procedure as in Example 1 was conducted except that the amount of the particles incorporated in the polyester film and the surface layer thickness were changed as shown in the film condition in Table 1, and the coating agent composition was changed as shown in Table 2, thereby obtaining polyester films. The properties of the thus obtained polyester films are shown in Table 3. As a result, it was confirmed that the polyester films exhibited good slip property, transparency and adhesion property, and were free from occurrence of interference fringes.

### Comparative Examples 1 to 7:

The same procedure as in Example 1 was conducted except that the film condition and the coating agent composition were changed as shown in Table 2, thereby obtaining coated films. The evaluation results of the thus obtained coated polyester films are as shown in Table 4, namely, it was confirmed that some of the films were deteriorated in slip property or transparency, clear interference fringes were observed on some of the films, or some of the films had a poor adhesion property.

**Table 1**

| Film condition | Content of particles X (ppm) | Content of particles Y (ppm) | Surface layer thickness (µm) |
|---|---|---|---|
| 1 | 250 | 0 | 3.8 |
| 2 | 350 | 0 | 3.8 |
| 3 | 500 | 0 | 3.8 |
| 4 | 150 | 0 | 2.7 |
| 5 | 350 | 0 | 2.7 |
| 6 | 350 | 0 | 2.0 |
| 7 | 0 | 0 | 3.8 |
| 8 | 0 | 350 | 3.8 |

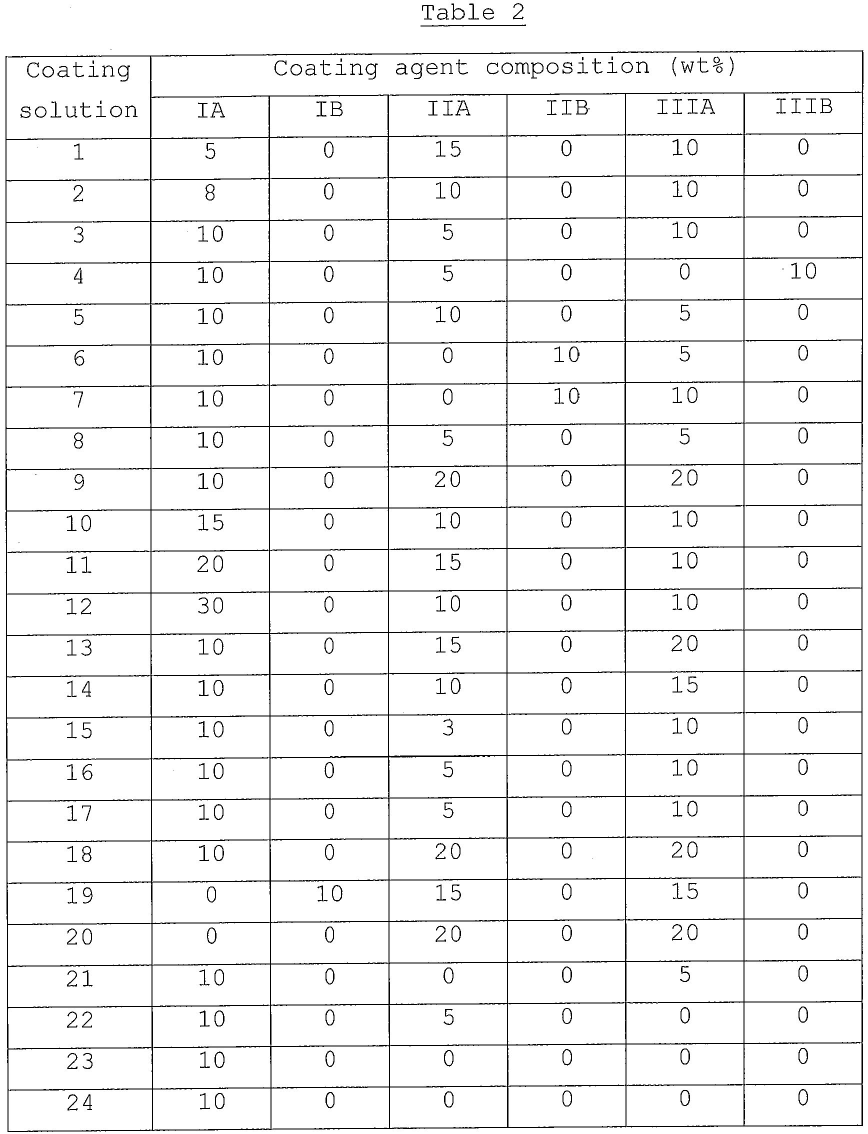

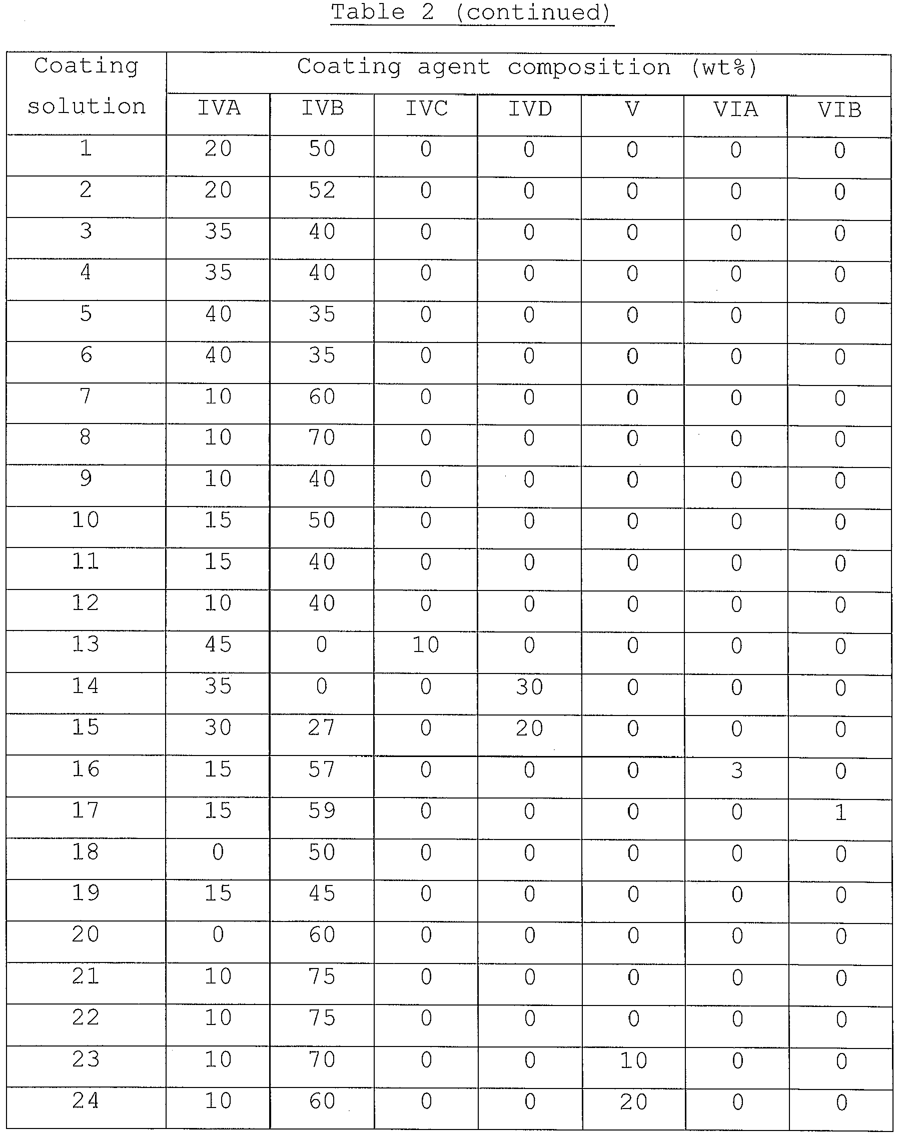

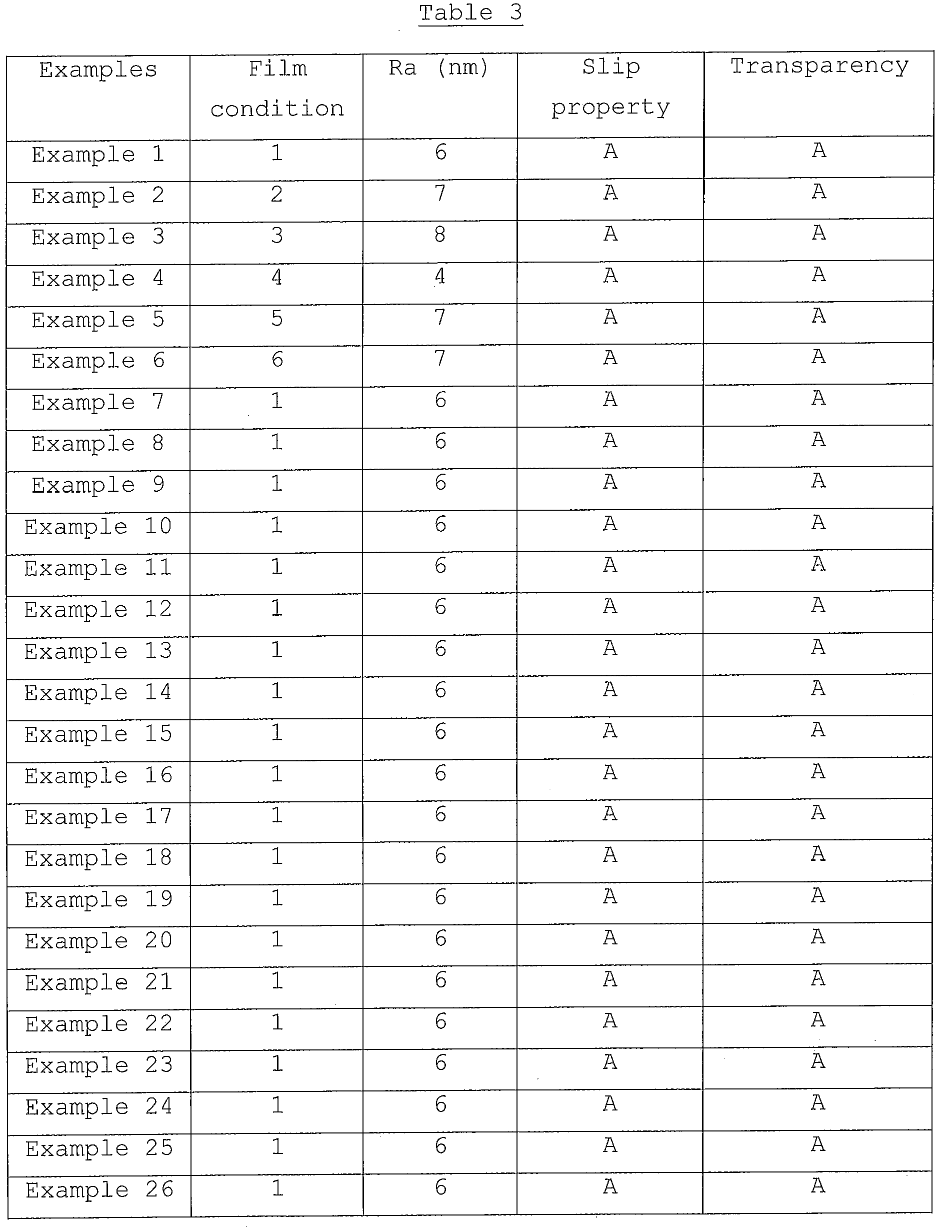

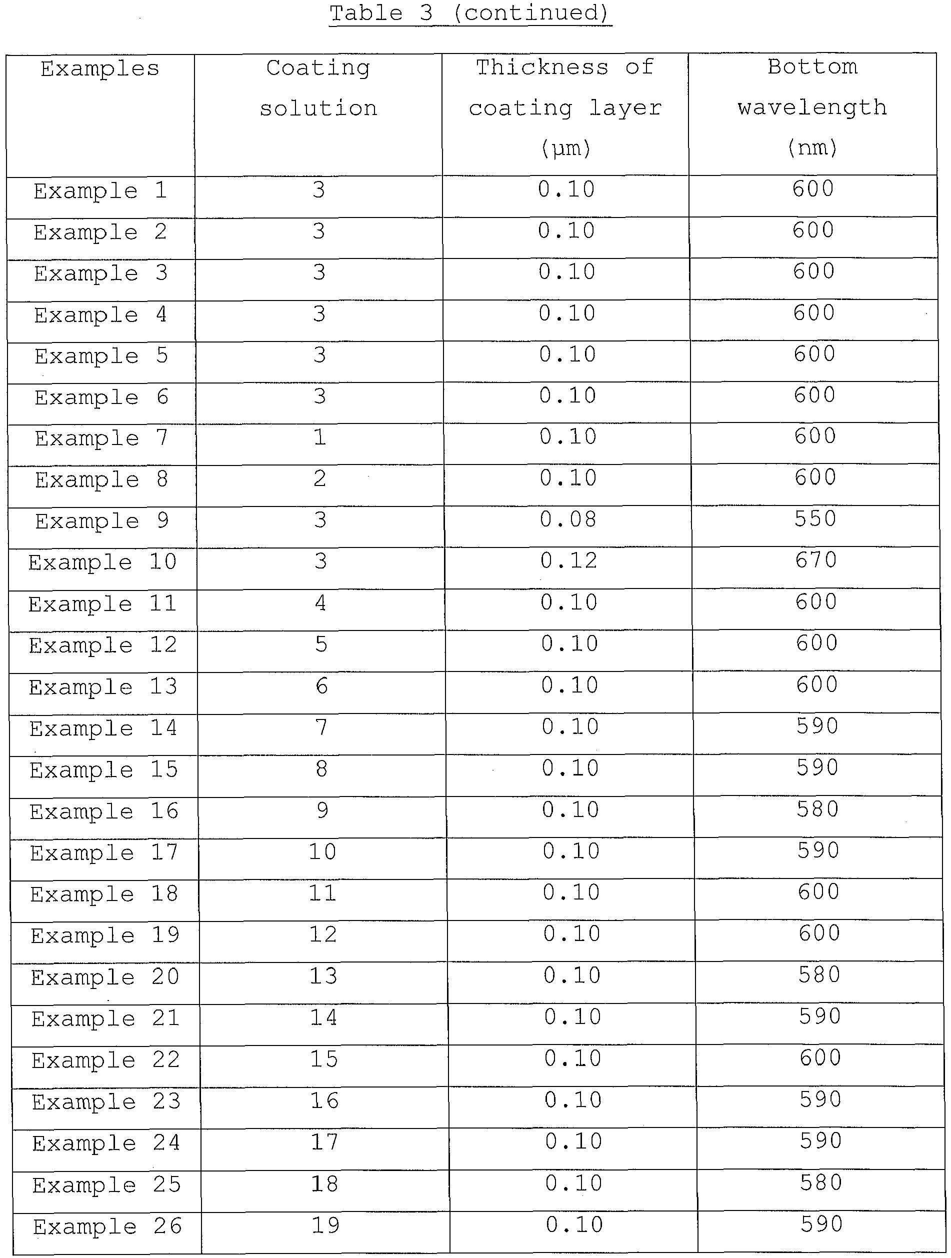

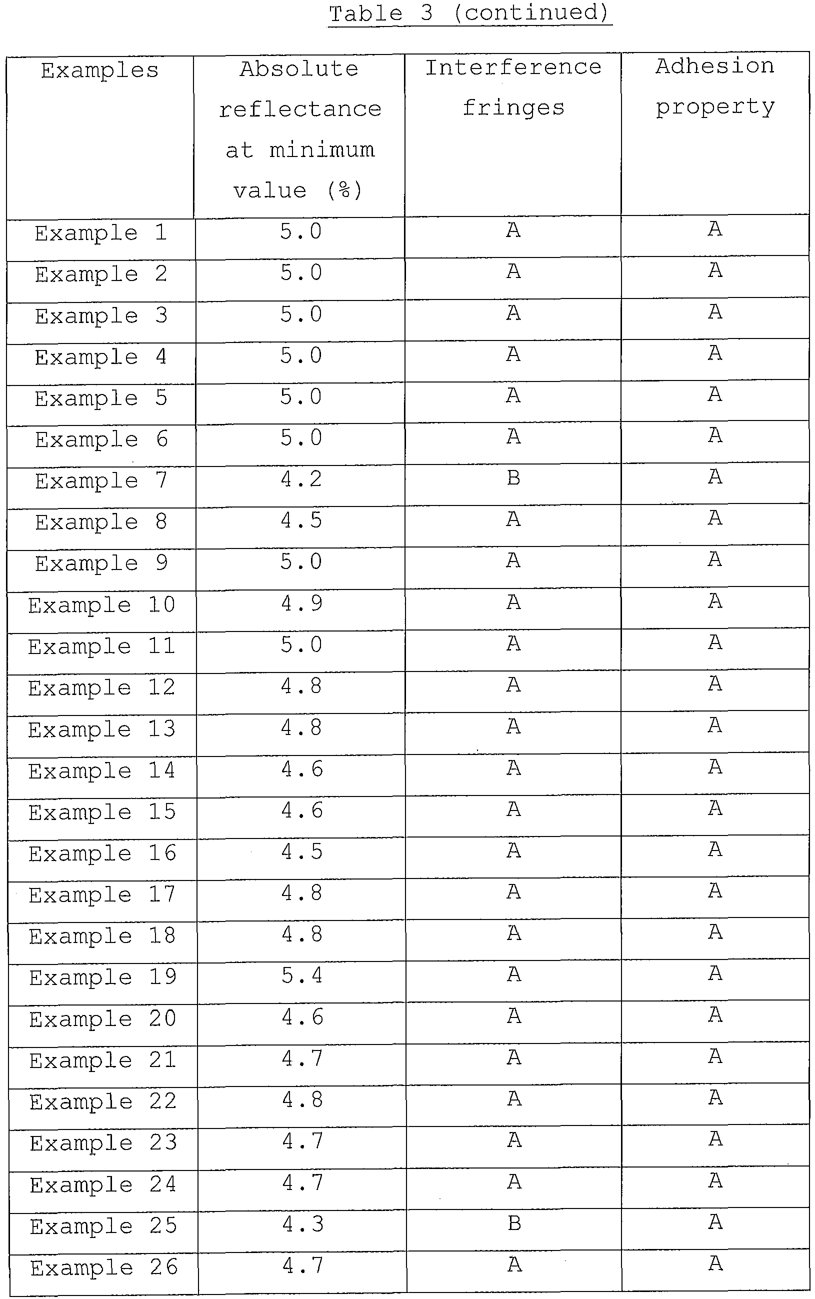

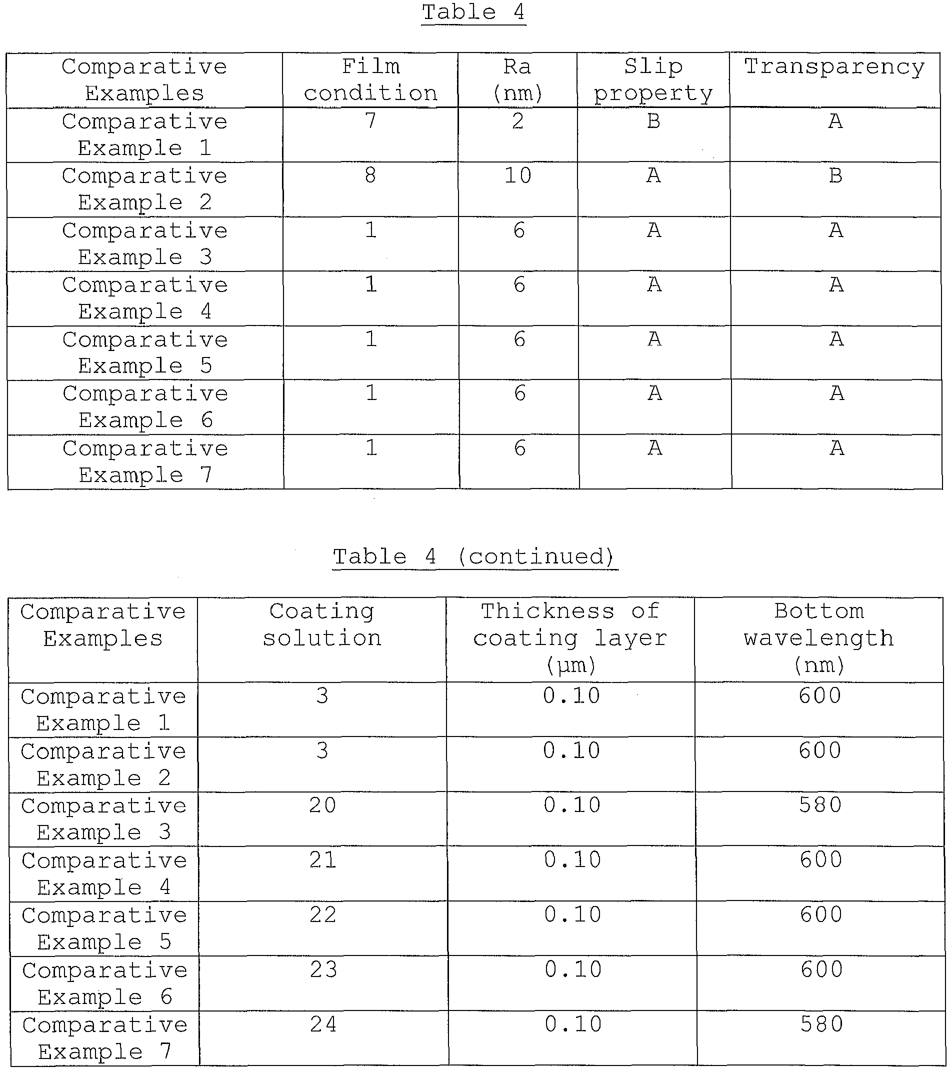

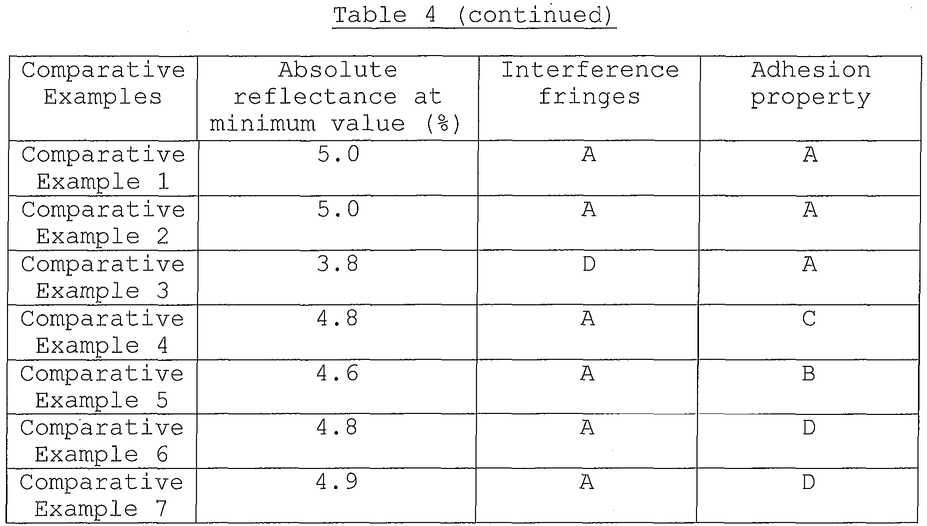

### INDUSTRIAL APPLICABILITY

The coated film of the present invention can be suitably used in the applications in which good transparency and slip property are needed, and good adhesion property to a surface functional layer such as a hard coat layer as well as good visibility are required with importance, for example, as film members for transparent electrodes for touch panels, etc.

## Claims

1. A coated film comprising: a polyester film comprising particles having an average particle diameter of not more than 3.0 µm, and a coating layer formed on at least one surface of the polyester film which is prepared from a coating solution comprising a metal oxide and two or more crosslinking agents, in which the coating layer has an absolute reflectance having one minimum value in a wavelength range of 400 to 800 nm, and the absolute reflectance at the minimum value is not less than 4.0%, wherein the particles are crosslinkable organic particles comprising aluminum oxide or zirconium oxide as a dispersant,
wherein a content of the metal oxide in the coating solution for forming the coating layer is 3 to 70% by weight,
wherein coating layer has a thickness in the range of 0.04 to 0.20 µm,
wherein a content of the particles in the polyester film is 1 to 5000 ppm,
wherein the average particle diameter is defined as average value of particles diameters of 10 particles, wherein the particle diameter is determined by measuring major axis diameters and minor axis diameters of particles in the polyester film using a laser microscope to obtain an average value thereof as a particle diameter thereof,
wherein absolute reflectance is measured by attaching a black tape to a back surface of a polyester film which is opposite to its surface to be measured, and the surface of a coating layer formed on the polyester film is subjected to measurement for an absolute reflectance thereof in a wavelength range of 300 to 800 nm using a ultraviolet/visible spectrophotometer and an automatic absolute reflectance analyzer under the conditions of a synchronous mode; incident angle: 5°; N-polarization; response: Fast; data sampling interval: 1.0 nm; band width: 10 nm; and scanning speed: 1000 m/min, to thereby evaluate a wavelength at a minimum value of a reflectance (bottom wavelength) as well as the reflectance.

2. The coated film according to claim 1, wherein the polyester film is in the form of a multilayer polyester film comprising both outermost layers each comprising the particles.

3. The coated film according to claim 1 or 2, wherein the metal oxide in the coating solution for forming the coating layer is zirconium oxide or titanium oxide.

4. The coated film according to any one of claims 1 to 3, wherein one of the crosslinking agents in the coating solution for forming the coating layer is an oxazoline compound or an epoxy compound.

5. The coated film according to any one of claims 1 to 4, wherein a content of the two or more crosslinking agents in the coating solution for forming the coating layer is 2 to 80% by weight, based on a total weight of whole non-volatile components in the coating solution.

6. The coated film according to any one of claims 1 to 5, wherein the coating solution for forming the coating layer further comprises a compound having a condensed polycyclic aromatic structure, and a content of the compound having a condensed polycyclic aromatic structure in the coating solution for forming the coating layer is 5 to 80% by weight based on a total weight of whole non-volatile components in the coating solution.

7. The coated film according to any one of claims 1 to 6, wherein the crosslinking organic particles are particles of a copolymer of styrene or a (meth)acrylate with divinyl benzene such as a styrene-divinyl benzene copolymer in which aluminum oxide or zirconium oxide is included as a dispersant.

## Patentansprüche

1. Beschichtete Folie, umfassend: eine Polyesterfolie, umfassend Teilchen mit einem durchschnittlichen Teilchendurchmesser von nicht mehr als 3,0 µm, und eine auf mindestens einer Oberfläche der Polyesterfolie gebildete Überzugsschicht, die hergestellt ist aus einer Beschichtungslösung, umfassend ein Metalloxid und zwei oder mehr Vernetzungsmittel, wobei die Überzugsschicht ein absolutes Reflexionsvermögen mit einem Minimalwert in einem Wellenlängenbereich von 400 bis 800 nm besitzt, und das absolute Reflexionsvermögen bei dem Minimalwert nicht weniger als 4,0% beträgt, wobei die Teilchen vernetzbare organische Teilchen sind, umfassend Aluminiumoxid oder Zirkonoxid als ein Dispergiermittel,
wobei ein Gehalt des Metalloxids in der Beschichtungslösung zur Bildung der Überzugsschicht 3 bis 70 Gew.-% beträgt,
wobei die Überzugsschicht eine Dicke im Bereich von 0,04 bis 0,20 µm aufweist,
wobei ein Gehalt der Teilchen in der Polyesterfolie 1 bis 5000 ppm beträgt,
wobei der durchschnittliche Teilchendurchmesser definiert ist als Durchschnittswert von Teilchendurchmessern von 10 Teilchen, wobei der Teilchendurchmesser bestimmt wird durch Messen von Hauptachsendurchmessern und Kleinachsendurchmessern von Teilchen in der Polyesterfolie unter Verwendung eines Lasermikroskops, um einen Durchschnittswert davon als einen Teilchendurchmesser davon zu erhalten,
wobei das absolute Reflexionsvermögen gemessen wird durch Befestigen eines schwarzen Bandes an einer Rückseite einer Polyesterfolie, die der zu messenden Oberfläche gegenüberliegt, und die Oberfläche einer auf der Polyesterfolie gebildeten Überzugsschicht der Messung eines absoluten Reflexionsvermögens hiervon in einem Wellenlängenbereich von 300 bis 800 nm unterzogen wird unter Verwendung eines Ultraviolett/Sichtbar-Spektrophotometers und eines automatischen Absolutreflexionsvermögen-Analysegeräts unter den Bedingungen eines Synchronmodus; Einfallswinkel: 5°; N-Polarisation; Antwort: schnell; Datenerfassungsintervall: 1,0 nm; Bandbreite: 10 nm; und Abtastgeschwindigkeit: 1000 m/Min, um hierdurch eine Wellenlänge bei einem Minimalwert eines Reflexionsvermögens (Boden-Wellenlänge) als auch das Reflexionsvermögen zu evaluieren.

2. Beschichtete Folie nach Anspruch 1, wobei die Polyesterfolie in Form einer Mehrschichtpolyesterfolie vorliegt, umfassend beide äußerste Schichten, die jeweils die Teilchen umfassen.

3. Beschichtete Folie nach Anspruch 1 oder 2, wobei das Metalloxid in der Beschichtungslösung zur Bildung der Überzugsschicht Zirkonoxid oder Titanoxid ist.

4. Beschichtete Folie nach mindestens einem der Ansprüche 1 bis 3, wobei eines der Vernetzungsmittel in der Beschichtungslösung zur Bildung der Überzugsschicht eine Oxazolinverbindung oder eine Epoxyverbindung ist.

5. Beschichtete Folie nach mindestens einem der Ansprüche 1 bis 4, wobei ein Gehalt der zwei oder mehr Vernetzungsmittel in der Beschichtungslösung zur Bildung der Überzugsschicht 2 bis 80 Gew.-% beträgt, basierend auf einem Gesamtgewicht sämtlicher nichtflüchtigen Komponenten in der Beschichtungslösung.

6. Beschichtete Folie nach mindestens einem der Ansprüche 1 bis 5, wobei die Beschichtungslösung zur Bildung der Überzugsschicht weiterhin eine Verbindung mit einer kondensierten polycyclischen, aromatischen Struktur umfasst, und ein Gehalt der Verbindung mit einer kondensierten, polycyclischen, aromatischen Struktur in der Beschichtungslösung zur Bildung der Überzugsschicht 5 bis 80 Gew.-% beträgt, basierend auf dem Gesamtgewicht sämtlicher nichtflüchtigen Komponenten in der Beschichtungslösung.

7. Beschichtete Folie nach mindestens einem der Ansprüche 1 bis 6, wobei die vernetzenden organischen Teilchen Teilchen eines Copolymers aus Styrol oder einem (Meth)Acrylat mit Divinylbenzol sind, wie etwa ein Styrol-Divinylbenzol-Copolymer, in welchem Aluminiumoxid oder Zirkonoxid als ein Dispergiermittel beinhaltet ist.

## Revendications

1. Un film revêtu comprenant: un film de polyester comprenant des particules ayant un diamètre de particule moyen ne dépassant pas 3,0 µm et une couche de revêtement formée sur au moins une surface du film de polyester qui est préparée à partir d'une solution de revêtement comprenant un oxyde métallique et deux ou plus d'agents de réticulation, dans lequel la couche de revêtement a une réflectance absolue ayant une valeur minimale dans une plage de longueur d'onde de 400 à 800 nm et dans lequel la réflectance absolue à la valeur minimale n'est pas inférieure à 4,0%,
dans lequel une teneur de l'oxyde métallique dans la solution de revêtement pour former la couche de revêtement est de 3 à 70% en poids,
dans lequel la couche de revêtement à une épaisseur dans la plage de 0,04 à 0,20 µm,
dans lequel une teneur en particules dans le film de polyester est de 1 à 5000 ppm, dans lequel le diamètre moyen de particule est défini comme la valeur moyenne de diamètres de particules de 10 particules,
dans lequel le diamètre de particule est déterminé en mesurant les diamètres d'axes principaux et les diamètres d'axes petits de particules dans le film de polyester en utilisant un microscope laser afin d'obtenir une valeur moyenne de ceux-ci et en tant que diamètre de particule de ceux-ci,
dans lequel la réflectance absolue est mesurée en attachant un ruban noir à une surface arrière d'un film de polyester qui se trouve en face de sa surface laquelle doit être mesuré, et la surface d'une couche de revêtement formée sur le film de polyester est soumise à la mesure pour la réflectance absolue de celle-ci dans une plage de longueur d'onde de 300 à 800 nm en utilisant un spectrophotomètre ultraviolet/visible et un analyseur de réflectance absolue automatique sous les conditions d'un mode synchrone; angle d'incidence: 5°; polarisation-N ; réponse: rapide ; intervalle d'échantillonnage de données: 1,0 nm ; largeur de bande:10 nm ; et vitesse de balayage: 1000 m/min, afin d'ainsi évaluer une longueur d'onde à une valeur minimale d'une réflectance (longueur d'onde basse) aussi bien que la réflectance.

2. Le film revêtu selon la revendication 1, dans lequel le film de polyester se présente sous la forme d'un film de polyester à plusieurs couches comprenant les deux couches les plus extérieures comprenant chacune les particules.

3. Le film revêtu selon la revendication 1 ou 2, dans lequel l'oxyde métallique dans la solution de revêtement pour former la couche de revêtement est l'oxyde de zirconium ou l'oxyde de titane.

4. Le film revêtu selon l'une quelconque des revendications 1 à 3, dans lequel l'un des agents de réticulation dans la solution de revêtement pour former la couche de revêtement est un composé d'oxazoline ou un composé époxy.

5. Le film revêtu selon l'une quelconque des revendications 1 à 4, dans lequel une teneur en deux ou plusieurs agents de réticulation dans la solution de revêtement Pour former la couche de revêtement est de 2 à 80% en poids, sur la base d'un poids total de composants non volatils entiers dans la solution de revêtement.

6. Le film revêtu selon l'une quelconque des revendications 1 à 5, dans lequel la solution de revêtement pour former la couche de revêtement comprend en outre un composé ayant une structure aromatique polycyclique condensée et une teneur en composé ayant une structure aromatique polycyclique condensée dans la solution de revêtement pour la formation de la couche de revêtement est de 5 à 80% en poids sur la base d'un poids total de composants non volatils entiers dans la solution de revêtement.

7. Le film revêtu selon l'une quelconque des revendications 1 à 6, dans lequel les particules organiques de réticulation sont des particules d'un copolymère de styrène ou d'un (méth)acrylate avec du divinylbenzène telle qu'un copolymère de styrène et de divinylbenzène dans lequel l'oxyde d'aluminium ou l'oxyde de zirconium est inclus en tant que dispersant.
